# EUROPEAN PATENT APPLICATION

(11) **EP 2 947 580 A1**
(43) Date of publication of application: **25.11.2015**
(21) Application number: 14169689.8
(22) Date of filing: 23.05.2014
(51) Int. Cl.: G06F 17/30

(54) **A method, an apparatus for labelling images, a program, and a computer-readable medium**

(71) Applicant: Canon Europa N.V., 1185 XB Amstelveen (NL)
(72) Inventor: Jureczky, Balint, 6722 Szeged (HU); Oranje, Floris, Uxbridge, Middlesex UB11 1ET (GB)
(74) Representative: Garner, Jonathan Charles Stapleton

(57) **Abstract**

Image labelling can be achieved for image files having a shared property. The shared property is identified using a selection criterion, allowing a sub-group of image files to be chosen from a collection of image files. A prompt is generated that requests information from a user about the sub-group of image files. Upon receiving a user response to the prompt, an image label is created which is associated with each image file in the sub-group of image files. The shared property can be identified using metadata associated with the image files. Image labelling can be used for curating a large collection of digital images.

## Description

### Technical Field:

The present invention relates to a method, an apparatus for labelling images, a program, and a computer-readable medium.

### Description of Related Art:

A variety of websites are available that permit users to import and view image files. An image file can include a digital image such as a photograph and metadata which describes the content and context of the image files. Images that are included in image files can be edited, stored and displayed, as part of a single-user experience or as part of a multi-user experience. Examples of websites that provide this type of functionality are Flickr™ and Facebook™.

Users are typically provided the opportunity to create image labels, which can be stored in association with the image file. Images may be displayed on a webpage, and image labels may be displayed in the vicinity of the image or applied directly to the image. Examples of image labels include identifiers showing who or what is shown in the image, text comments posted by users, indicators such as 'like' markers, albums in which the image is stored, details about the image, the number of times that the image has been viewed, and other information about the image. Image labels can include web links, such as links to profiles of users that have been identified in the image. It is against this background to which the present disclosure is directed.

Websites that are presently available provide a variety of options for labelling images, which facilitate the indexing, displaying and sharing of images. However, a disadvantage of websites that are presently available is that the creation of image labels requires users to invest a significant amount of time creating image labels. An issue addressed by the present application is how to improve the curating of images, which can be achieved by simplifying the creation of image labels. To reduce the burden placed upon users, there is a demand for a way to create image labels that is customised to individual user's image collections.

### Summary

According to a first aspect of the present invention there is provided a method of labelling images contained in image files performed by an information processing apparatus, comprising: applying a selection criterion to a group of image files in order to select a sub-group of image files that have a shared property; identifying the sub-group of image files to a user; displaying to the user a prompt; and upon receiving a user response to the prompt: creating an image label based upon the user response; and creating an association between the label and an image file in the group of image files.

An advantage of this method is that it makes it easier for a user to add the same image label to more than one image. By providing a prompt, the user is encouraged to add image labels. The user is assisted in labelling images, making it faster and more convenient. By using the shared property to identify the image files, the user is helped to create albums. The provision of customised image labels also facilitates the creation of image labels which may conform to a standardised format that can easily be recognised by a computer. As a result of this method, a simpler way of curating image files is provided that allows the image files to be easily indexed, stored and searched.

Preferably, the selection criterion is based upon at least one of: a date that is attributed to the image file; a time attributed to the image file; a means of creation of the image file; a geographical location where the image file was created; and metadata that is attributed to the image file.

An advantage of the selection criterion being based upon a date that is attributed to the image file is that this allows the image files to be curated based upon a date that is shared by each of the image files. Thus, the user can be prompted to add a label to an event that took place on a particular date. Optionally, the dates attributed to the image files may fall within a range of dates, allowing an event that occurs over a time interval to be identified. The date may be the date on which the image was created or the date on which the image was captured. Alternatively, the date may be the date on which the image was modified. An advantage of sorting image files by date is that this facilitates sorting the images into chronological order. Choosing the date of creation of the image file for selecting the image file permits information to be used for the creation of customised image labels that relates to the date of capture of the image or the date of editing the image file. As an example, the image label could include text that states the date on which the image file was created.

An advantage of the selection criterion being based upon the time attributed to the image file is that this allows the image files to be curated based upon a time interval that is shared by each of the image files. Thus, the user can be prompted to add a label to an event that took place at a particular time. The time may be the time at which the image was created, the time at which the image was captured, or the time at which the image was modified. An advantage of sorting image files by time is that this facilitates sorting the images into chronological order.

An advantage of the selection criterion being based upon a means of creation of the image file is that the user may use a particular device for a particular purpose. Also, a particular device may be configured to produce image files that share a particular property, and therefore this property can be used as a selection criterion to identify a sub-group of image files and to generate customised prompts.

An advantage of the selection criterion being based upon a geographical location where the image file was created is that image files created in the same location are likely to have the same context. For example, images that were created in new locations could have been taken on holiday.

An advantage of the selection criterion being based upon metadata that is attributed to the image file is that metadata is usually produced when creating an image. Using standardised information allows customised prompts to be generated that are can be easily recognised by a computer. The metadata can be used to select targeted questions that ask the user about properties of the image file. Alternatively, the metadata could be used to add further details to the label. The metadata information is likely to be relevant to the content and context of the image stored in the image file.

Preferably, the selection criterion involves identifying a time interval and selecting image files that were created during that time interval. Advantageously, selecting image files that were created during a time interval increases the likelihood that the images relate to the same event, and should be given the same label.

Preferably, the time interval includes a date for which the number of image files created exceeds a threshold. Advantageously, users typically take a large number of images at events that are important to them. Therefore, use of a threshold increases the chance that the user will be presented with relevant images. The threshold value can be calculated based upon the number of image files that are available for selection. This allows the threshold value to be customised depending upon the number of image files that have been created.

In some embodiments, the time interval includes a plurality of adjacent dates, wherein for each of the dates the number of image files created exceeds a threshold.

In other embodiments, the time interval includes a plurality of adjacent dates, wherein an average of the number of image files created on each date of the time interval exceeds a threshold.

In such embodiments, the time interval may include a predefined date. An advantage of using a predefined date to determine a time interval is that dates that have been chosen in advance are more likely to be dates that are significant to the user. This increases the likelihood that the user will want to add labels to the image files. Furthermore, using a predefined date allows a prediction to be made about details of the event that has been identified.

Further, the time interval may comprise: a first number of dates that occur before the predefined date, the first number of dates determined by a first tolerance value; and a second number of dates that occur after the predefined date, the second number of dates determined by a second tolerance value. In this way, a time interval of a specified duration can be selected around each of the predefined dates.

The predefined date may be a date that represents a public holiday, a religious event, a date of cultural significance, or a date that has been specified by the user. Advantageously, the use of predefined dates can facilitate the creation of a prompt that is well targeted, allowing customised image labels to be created that relate to the contents of an image.

In embodiments where a threshold is used, the threshold is preferably calculated based upon the number of image files that are available for selection from the group of image files. Accordingly, important time intervals can be identified for a specific plurality of image files, so the selected set of image files is well customised to the specific user. For large sets of images, a large threshold can be used. For small sets of images, a small threshold can be used.

In some embodiments, the method comprises: calculating a relevancy value based upon the number of image files created during the time interval; assigning the relevancy value to the time interval; and ranking the time interval based upon its relevancy value.

Advantageously, ranking the time intervals can be used to decide how to select which sub-group of image files should be displayed to the user. Priority is given to displaying sub-groups of images that have a higher relevancy value. This has the advantage that the highest ranked image files can be labelled before prompts are provided for labelling the lower ranked groups of image files. The calculation of the relevancy value may be dependent upon the total number of image files created during the time interval or the average number of image files created each day during the time interval.

In some embodiments, the prompt is generated based on the selection criterion. Advantageously, a user is more likely to respond to a customised prompt than a generic prompt. This allows more image files to be labelled, and ensures that the labels are appropriate to the images contained in the image files.

In some embodiments, the prompt is selected from a plurality of possible prompts. Optionally, the prompt is selected at random. Advantageously, this has the advantage that a wide range of available prompts could be offered to users. The way in which the user responds could then be used to inform the way in which future prompts are generated and selected.

The user response to the prompt may comprise text entered by a user. Advantageously, this text can be used for creating label text.

In some embodiments, the user response to the prompt comprises a user: adding image files to the sub-group of image files; or removing image files from the sub-group of image files. Advantageously, image labels that are created can be associated with the appropriate image files. Furthermore, the user is more likely to respond to a prompt if it is possible for the user to create an image label that is directed to specific image files in the collection of images.

The association between the image label and each image file may comprise the storage of a custom label. Advantageously, this prevents the need to modify the metadata associated with the image file. One technique for curating a group of image files is to attribute a unique photo identifier to each image file. Thus, the unique photo identifier can be used to associate the image, the metadata, the EXIF information, and any additional extracted information. Furthermore, the unique photo identifier can be used to create the association between the image label and the image file. The unique photo identifier could be used for the indexing and storage of the image file, which can be used to facilitate the search of an image collection.

According to a second aspect of the present invention there is provided an apparatus for labelling images contained in image files, comprising: selecting means configured to apply a selection criterion to a group of image files in order to select a sub-group of image files that have a shared property; generating means configured to generate user interface information for identifying the sub-group of image files to a user and displaying a prompt to the user; receiving means configured to receive a user response to the prompt; and creating means configured to create an image label based upon the user response, and create an association between the label and an image file in the group of image files.

A third aspect of the present invention provides a program that, when implemented by an information processing apparatus, causes the information processing apparatus to perform a method according to the first aspect of the present invention.

A fourth aspect of the present invention provides a computer-readable medium storing a program according to the third aspect of the present invention.

A further aspect of the present invention provides a user interface comprising: a sub-group of images that has been selected from a group of images and has a shared property; and a prompt for a user to respond to.

### Brief description of the drawings:

Embodiments will now be described, by way of example only, with reference to the accompanying figures, in which:
FIG. 1 is a block diagram showing the system configuration;
FIG. 2 is a block diagram showing the hardware configuration of a client;
FIG. 3 is a screen shot showing a webpage used for displaying a collection of images;
FIG. 4A is a screen shot showing a web page used to display the data associated with an individual image file, including the image and labels;
FIG. 4B is a screen shot showing a web page used to display the data associated with an individual image file, including the image and metadata;
FIG. 5 is a flow chart showing steps of a method of labelling, organising and displaying a group of images;
FIG. 6A is a screen shot showing a webpage used to display a sub-group of images that have been selected from a collection of images, wherein the images that comprise the sub-group of images have all been identified as having dates of creation that cluster around a particular time interval;
FIG. 6B is a screen shot showing how the favourite images in the sub-group of images shown in FIG. 6A can be identified by a user;
FIG. 7A is a screen shot showing a webpage used to display a sub-group of images that have been selected from a collection of images, wherein the images that comprise a sub-group of images have all been identified as having dates of creation that coincide with a predefined date;
FIG. 7B is a screen shot showing how the shooting mode of the images in the sub-group of images shown in FIG. 7A can be identified by a user;
FIG. 7C is a screen shot showing how selected images can be given a title;
FIG. 8 is a screen shot showing a webpage used to display a group of images and labels;
FIG. 9A is a timeline showing how the sub-group of images shown in FIG. 6A can be selected;
FIG. 9B is a timeline showing how the sub-group of images shown in FIG. 7A can be selected;
FIG. 10A is a flow chart showing steps of a first method that can be used to select a sub-group of image files;
FIG. 10B is a flow chart showing steps of a second method that can be used to select a sub-group of image files;
FIG. 11 is a flow chart showing steps of a method of labelling a group of images.

### Detailed description:

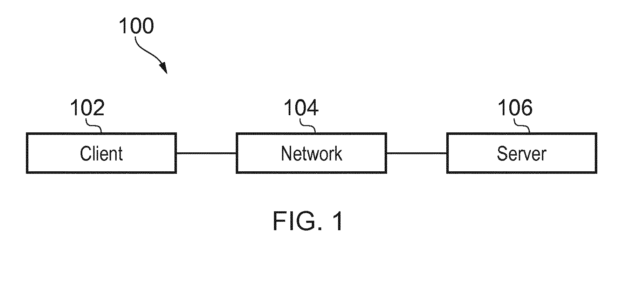

FIG. 1 shows an image management system 100 comprising a client 102 connected to a server 106 via a network 104, for example the internet. The server 106 stores image management software for storing and organising image files. The client 102 accesses the server using a web browser installed on it, such as Internet Explorer 10™. The image files include images such as, for example digital photographs, together with metadata that describes properties of the images. The image management software provides a web interface allowing a user to view images stored on the server 106.

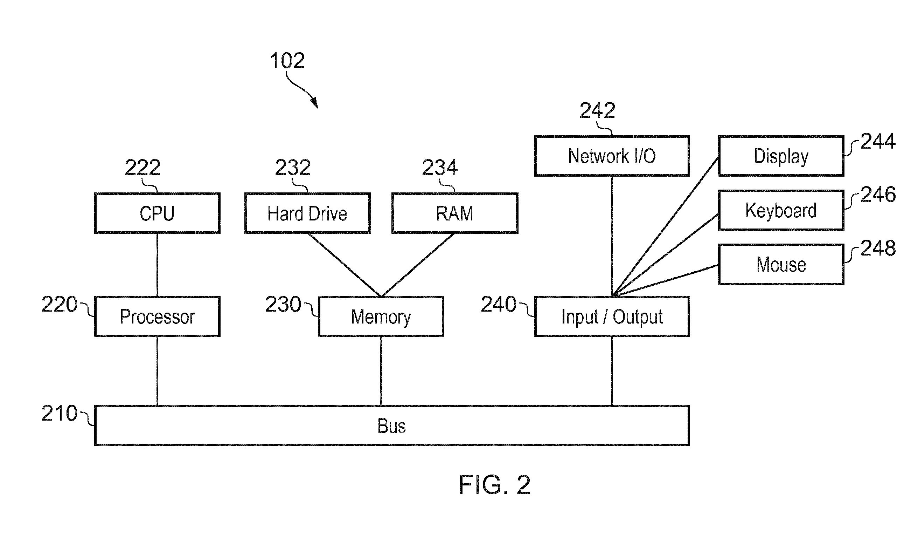

FIG. 2 shows a hardware configuration of the client 102. The client 102 includes a bus 210 connected to a processor 220, a memory 230 and an input/output interface 240. The processor 220 includes a central processing unit (CPU) 222. The memory 230 includes a hard disk 232 and a random access memory (RAM) 234. Optionally, the memory may include the memory of an auxiliary device, such as a USB flash drive or the memory of an image forming device. The optional image forming device could be, for example, a digital camera or a scanner. The input/output interface 240 includes a network I/O 242, a display 244, a keyboard 246, and a mouse 248. Software which runs on the client 102 can be stored on the hard disk 232 or retrieved via the network I/O 242.

The client has installed on it an image uploader program that is configured to monitor the contents of user-designated folders on the client 102 and to send images stored in the user-designated folders to the image management software on the server 106 automatically when images that have not previously been uploaded are detected.

A user may also upload files from the client 102 to the image management software on the server 106 using the web browser installed on the client. The image management software provides a web interface viewable in a browser window that allows a user to drag and drop image files stored on the client 102 into a web browser window. The dragged and dropped files are then uploaded to the image management software. Implementation of this function is not described in detail here, but may be achieved in a straightforward manner using HTML5. In use, the client 102 therefore transmits image files over the network 104 to the image management software on the server 106.

An alternative way of importing images to the image management software is from a third party website such as Facebook™ or Flickr™. In this case the images are imported by the image management software from the third party website, when the user provides appropriate permissions and instructions to the third party website to allow images associated with the user's account to be exported to the image management software via a suitable web interface.

The image management software in this embodiment can be regarded as a cloud based service. Accordingly, the image management software is configured to store and manage images associated with multiple user accounts. When a user initially wants to use the image management software, the user goes through a registration workflow (detailed description of which is unnecessary for the present invention) in which the user provides personal details and, in response, the image management software assigns the user a unique personal identifier to the user. When images are subsequently imported into the image management software by the user they are associated with the user account created in the registration process. For example, the image uploader program on the client uploads image files in association with a particular user account that is configured by the user within the image uploader program. When using the web browser to upload image files, the user will first have to pass through a login workflow before the image management software will serve the web interface that allows dragging and dropping of files. In this way, image files received via the web interface are associated with a user account and, hence, the user's unique personal identifier.

When images are received at the image management software they are stored in association with the user's unique personal identifier and any image metadata associated with the image is stored in association with the image file. In the present embodiment storage and retrieval of files is performed using a search engine such that received image files are indexed upon receipt. Other steps also take place upon receipt of the image file, such as generation of thumbnail images etc., but detailed description of this workflow is unnecessary for the present invention.

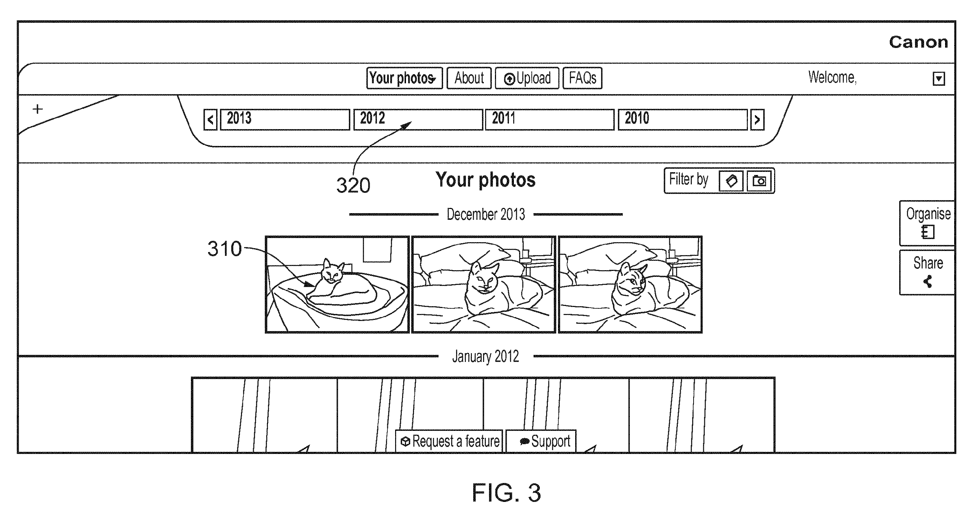

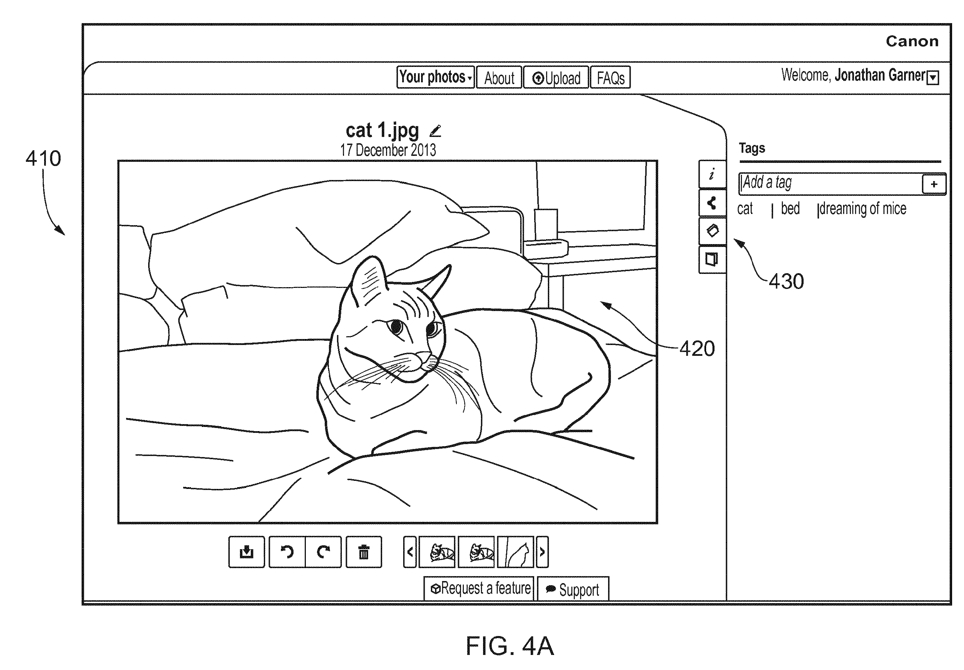

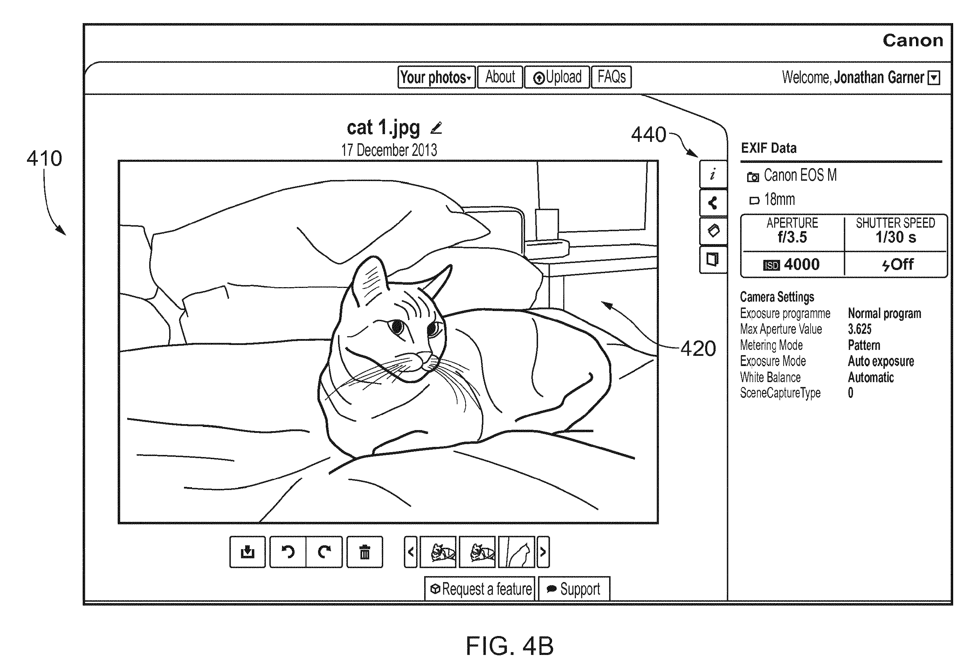

In order to allow a user to view the images that have been uploaded to the image management software, the image management software is configured to serve various web pages that allow a user to browse his or her images. Examples of such web pages are shown in FIGs. 3, 4A and 4B.

FIG. 3 shows a web page served by the image management software to display some of a user's images 310. The images in the web page 310 are populated by a collection of images associated with a logged-in user's unique personal identifier. In this embodiment, the images are shown as part of a single-user experience (a session on the image management software involving only one user), wherein the user views only images associated with their unique personal identifier. Alternatively, in another embodiment, the images may be shown as part of a multi-user experience, wherein the user can view images associated with different user's personal identifiers.

A calendar tool 320 is provided towards the top of the web page to allow the user to filter the displayed group of images 310 based upon the date, month and year of which the image files were created. The calendar tool (320) includes buttons which can be used to filter the images based upon date.

A user can select an individual image from the collection of images shown in FIG. 3 by clicking on the image. The next webpage served by the image management software is shown in FIGs. 4A and 4B.

In addition to displaying the image 420, the web pages 410 displayed in the browser and shown in FIGs. 4A and 4B also display other information about the image. The screens are the same except that for the screen shown in FIG. 4A, the tag button 430 is active and in FIG. 4B the EXIF information button 440 is active. In FIG. 4A image labels in the form of tags created by a user, such as identifiers showing who or what is shown in the image, are displayed. In FIG. 4B EXIF information stored with the image is stored such as aperture, shutter speed, and ISO at the time that the picture was taken. The image labels shown here are not limiting. For example, the image labels may include a date attributed to the image file, a time attributed to the image file, a means of creation of the image file, or a geographical location where the image file was created. Image labels can also include tags created by a user, such as identifiers showing who or what is shown in the image, text comments posted by the user, indicators such as 'like' markers, albums in which the image is stored, details about the image, the number of times that the image has been viewed. Image labels can include web links, such as links to profiles of users that have been identified in the image.

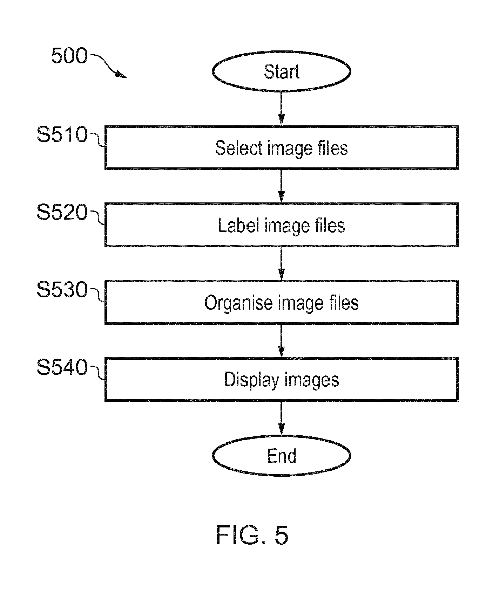

FIG. 5 provides an illustration of a tagging method performed by the image management software 500 according to a first embodiment of the present invention.

The tagging method includes the following steps. First, a group of image files are selected S510, which are then labelled by the user, S520. Next, the user is prompted to further organise the image files S530, allowing a user to indicate favourite images, adjust labels associated with the images, etc., and then the images stored in the image files are displayed S540.

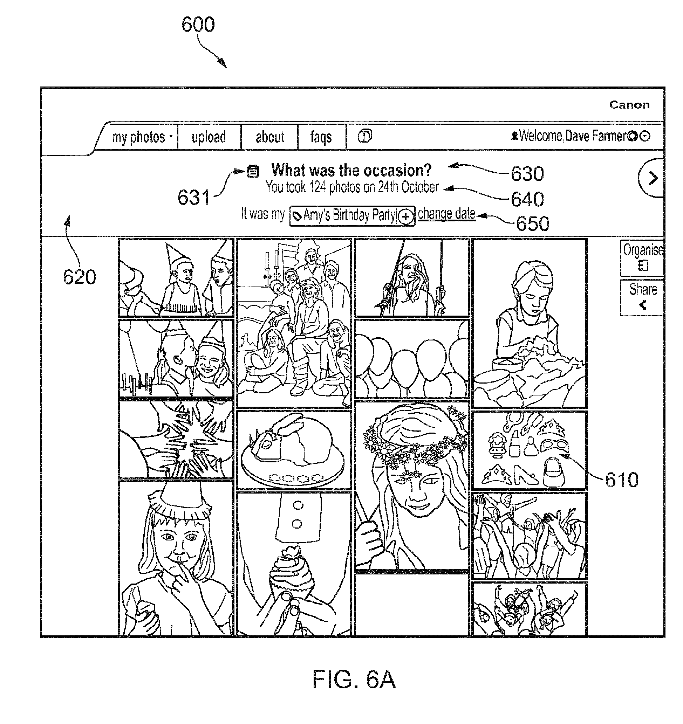

FIGs. 6A-B, 7A-C and 8 provide examples of the method shown in FIG. 5.

FIG. 6A shows a webpage 600 that displays a sub-group of images 610 that have been identified in accordance with an algorithm that identifies images that share dates of creation that cluster around a particular time interval. The algorithm that identifies the sub-group of images can be executed automatically, or alternatively, upon being initiated by the user. The sub-group of images 610 is displayed to the user together with a prompt 630. FIG. 6A includes a banner 620 that displays text. The user is prompted by the banner 620, which asks the question 630:
'What was the occasion?'

The prompt 630 includes the display of a calendar icon 631, which indicates that the prompt relates to the date attributed to the image. The user can also be informed of details of how the algorithm identified the sub-group of images, which in FIG. 6A is provided by the statement 640 that:
'You took 124 photos on 24th October.'

Thus, the user is encouraged to identify the occasion that was taking place when the images were created. In the example of FIG. 6A, the user has responded to the prompt 630 by typing text into a text box 650 which states that the event corresponds to:
'Amy's birthday party!'

The answer entered by the user is attributed as a label to the images in the sub-group and stored in association with each image in the image management software.

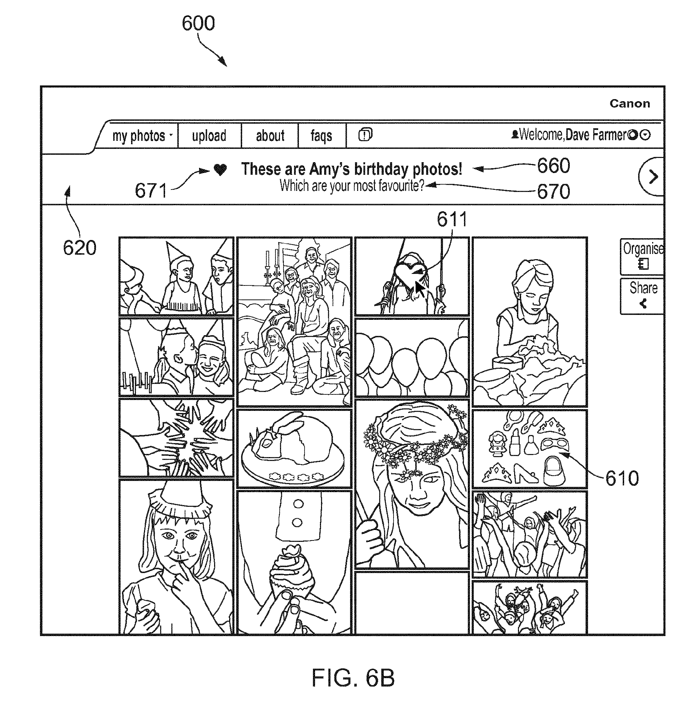

FIG. 6B shows a webpage 600 that has been presented after the user has submitted a response to the prompt 630. A label 660 is shown in a banner 620 above the sub-group of images 610, which states:
'These are Amy's birthday photos!'

The user is provided with a further prompt 670, which asks the question:
'Which are your most favourite?'

The prompt includes the display of a love-heart icon 671, which indicates to the user that the 'favourite' attribute is to be assigned to images. The user can respond to the prompt 670 by using the mouse 248 to select images. FIG. 6B shows that the love-heart icon is used to label images that are selected by the user 611, and these images are tagged with the 'favourite' attribute. The favourite attribute is stored in association with the selected image in the image management software. The user can respond to the prompt by selecting as many images as they choose. The user can be provided with further prompts that relate to the 'favourite' images.

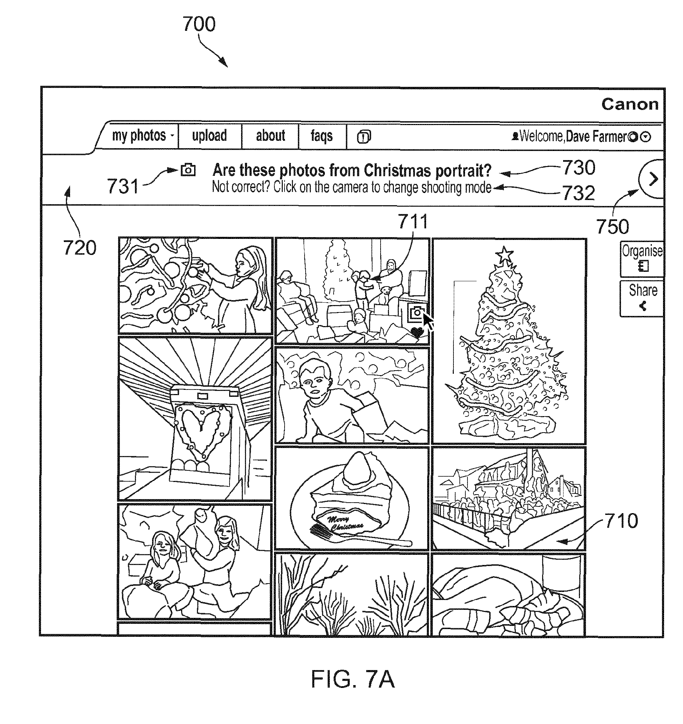

FIG. 7A shows, by way of a second workflow, a webpage 700 that displays a sub-group of images 710 that have been identified in accordance with an algorithm that identifies images that share dates of creation that coincide with a predefined date, in this case Christmas. The user is prompted by the banner 720, which asks the question 730:
'Are these photos from Christmas portrait?'

The prompt 730 includes the display of a camera icon 731, which indicates that the prompt relates to attributes that are associated with the means of creation of the images. A prompt can further include instructions which explain to the user how to respond to the prompt. In FIG. 7A, the user is provided with the instructions 732:
'Not correct? Click on the camera to change shooting mode.'

The sub-group of images 710 includes an individual image 711 that is labelled with the love-heart icon and the camera icon. The love-heart icon indicates that the favourite attribute may be assigned to image 711. The camera icon allows the user to specify the camera attributes by modifying the shooting mode label. The user can respond to the prompt by changing the shooting mode for as many images as they choose.

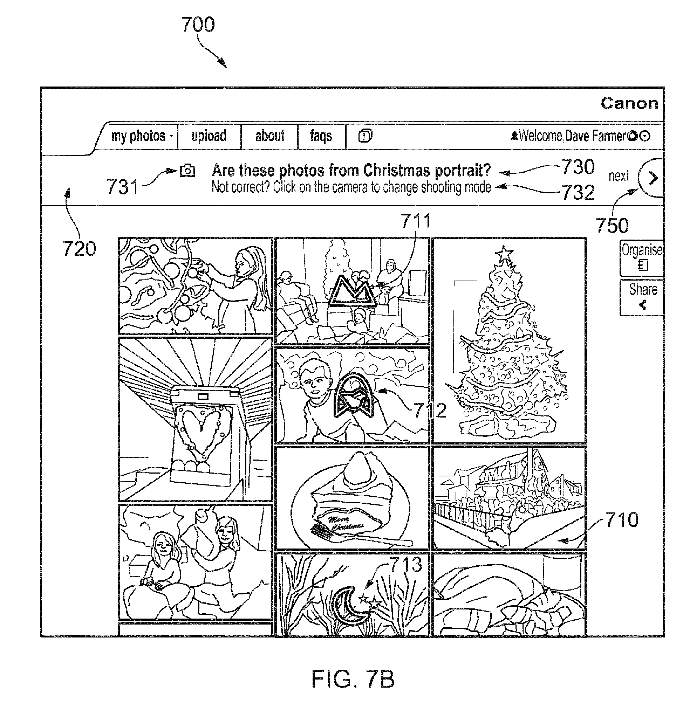

FIG. 7B shows the webpage 700 after the user has responded to the prompt 730. The webpage shows that the user has specified the shooting mode for three of the images in the sub-group of images 710. A first image 711 is labelled by the landscape icon, which indicates that the shooting mode has been assigned as 'landscape'. A second image 712 is labelled by the portrait icon, which indicates that the shooting mode has been assigned as 'portrait'. A third image 713 is labelled by the night icon, which indicates that the shooting mode has been assigned as 'night'. The mouse 248 is shown clicking a 'next' button 750, which will cause the user to be provided with a further prompt about the present sub-group of images 710, or alternatively will allow the user to format a new sub-group of images.

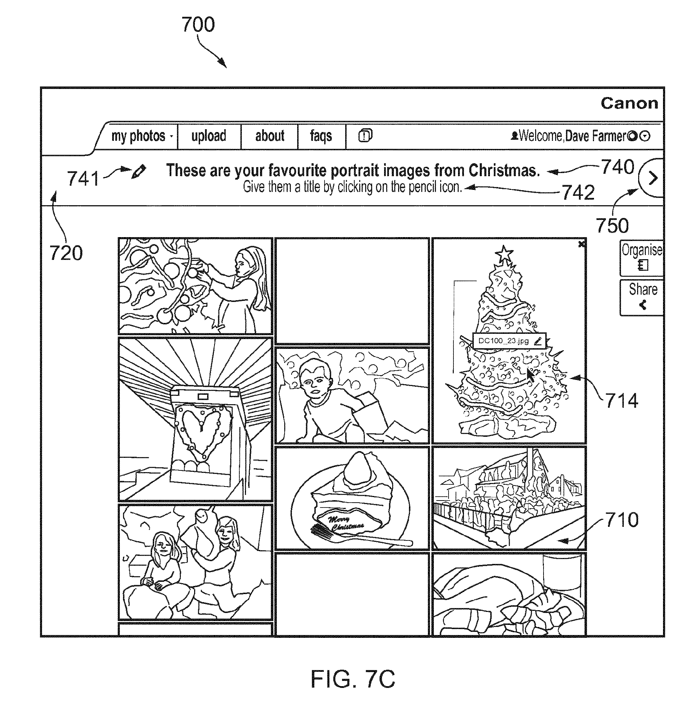

FIG. 7C shows a webpage 700 that has been presented after the user has clicked the 'next' button 750. A label 740 is shown in a banner 720 above the sub-group of images 710, which states:
'These are your favourite portrait images from Christmas.'

The user is prompted by the instruction 742:
'Give them a title by clicking on the pencil icon.'

The prompt 740 includes the display of the pencil icon 741, which indicates that the prompt relates to text that is to be provided by the user. FIG. 7C shows that the user has selected an image 714 from the sub-group of images 710. The image 714 is displayed together with the pencil icon and the name of the image file. By clicking the pencil icon, the user can respond to the prompt by providing a title of the image. The title that is entered by the user can be stored by the image management software as text that is associated with the individual image, for example by modifying the file name for the image file. The image 714 is also displayed together with an 'x' icon, which the user can click to remove the image 714 from the sub-group of images 710. In addition to the software allowing the user to remove images from the sub-group of images, the user can also add images to the sub-group of images. Thus, the user can respond to the prompt by tailoring the sub-group of images and confirming that the chosen images satisfy the selection criterion.

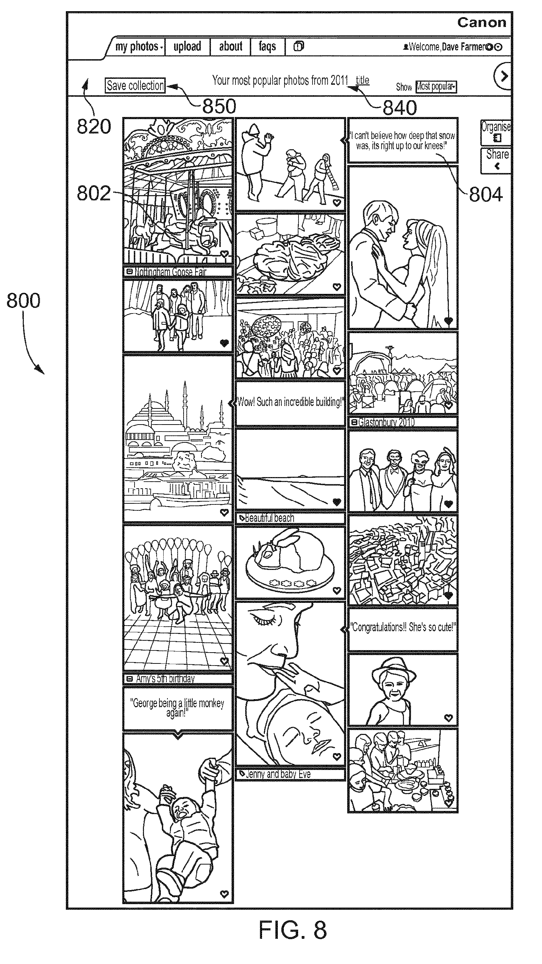

FIG. 8 shows a webpage 800 that is displayed S540 after the user has responded to the prompts. The results are presented after the user has responded to the prompts.

The webpage 800 shows the sub-group of images 802 together with labels 804 that are attributed to the images. The labels can include text associated with the images, such as the title of the images and icons representing the attributes associated with the images. FIG. 8 shows images labelled with the love-heart icon, which indicates that these images have been assigned the 'favourite' attribute. FIG. 8 also shows the calendar icon, which accompanies an image that has been assigned the event label "Nottingham Goose Fair". FIG. 8 also includes the comment label "I can't believe how deep that snow was, it's right up to our knees!" The banner 820 introduces the resulting images, informing the user that the webpage displays "Your most popular photos from 2011" 840. The user has the opportunity to save the sub-group of images 850. The webpage 800 may provide options to the user that allow further changes to be made to the sub-group of images 850 before saving.

In FIGs. 6A-B, the images are shown displayed in four columns. In FIGs. 7A-C and 8, the images are shown displayed in three columns. In other embodiments, more or fewer columns could be used, such as a single column of images. A user can scroll down the web page to view images displayed in the sub-group. Each column has a constant width, and if necessary, the images are resized to have this width. Images could have different heights if the images have different sizes, for example due to the image being cropped to a particular size or the image being oriented as portrait or landscape. In other embodiments, the images could be displayed in rows having constant height, with the width of the images being variable.

The results of the steps shown in FIG. 5 are demonstrated by the examples provided in FIGs. 6A-B, 7A-C and 8. FIGs. 6A and 7A show the image files that have been selected according to step S510, in both cases the selection criterion being based upon the date of creation of the image files. For FIG. 6A, the image management software 500 has determined that the sub-group of images 610 were created during the same occasion. For FIG. 7A, the image management software 500 has determined that the sub-group of images 710 were created during a predefined event. The user is prompted to label the images in accordance with step S520, the methods of labelling images including entering text 650, as shown in FIG. 6A, and selecting icons 711, 712, 713, as shown in FIG. 7B. The user is then provided with further prompts so that the images can be organised in accordance with step S530. Organising the images can include selecting favourite images 670, as shown in FIG. 6B, and giving the images a title 742, as shown in FIG. 7C. The resulting sub-group of images is then displayed to the user in accordance with step S540, an example of which is shown in FIG. 8.

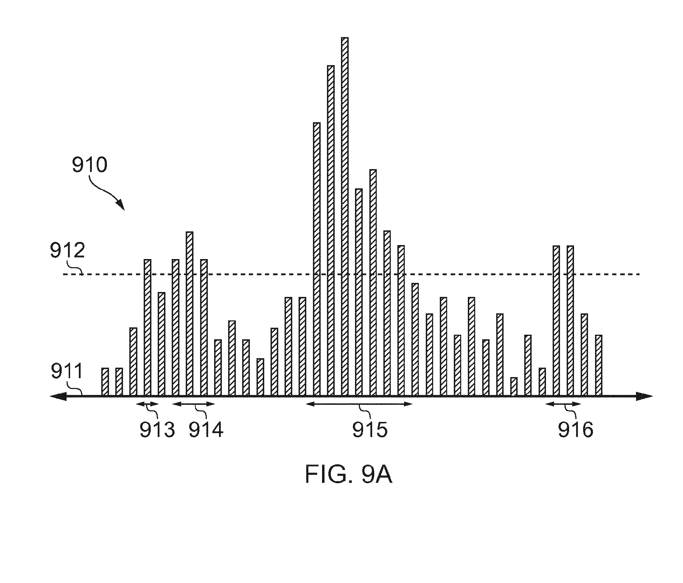

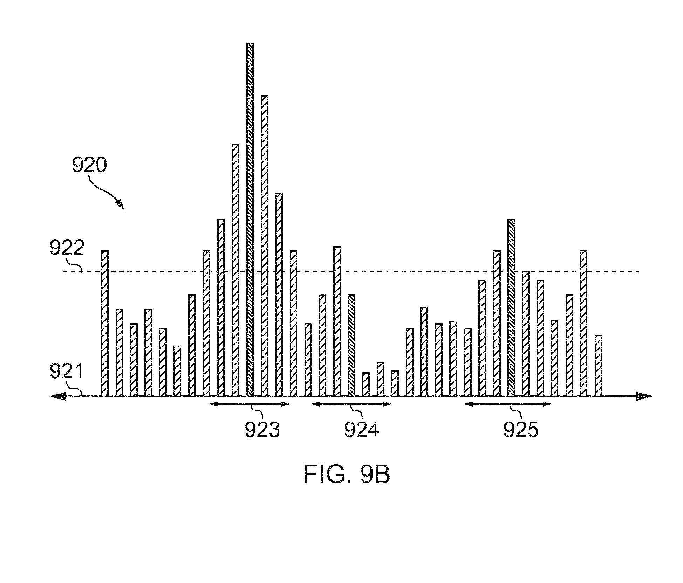

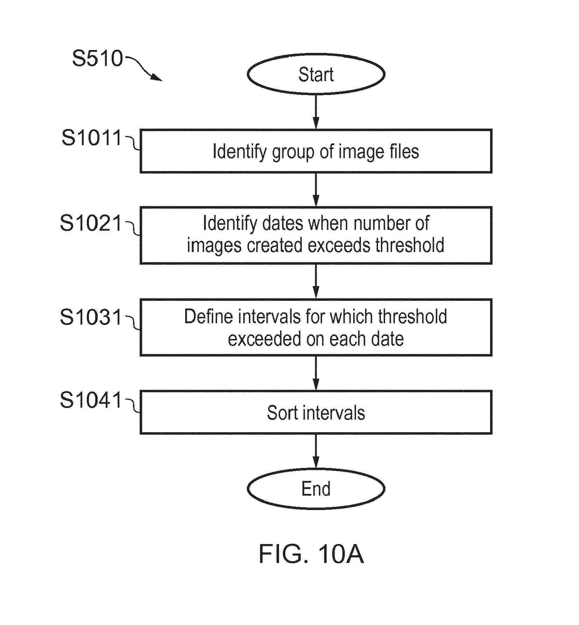

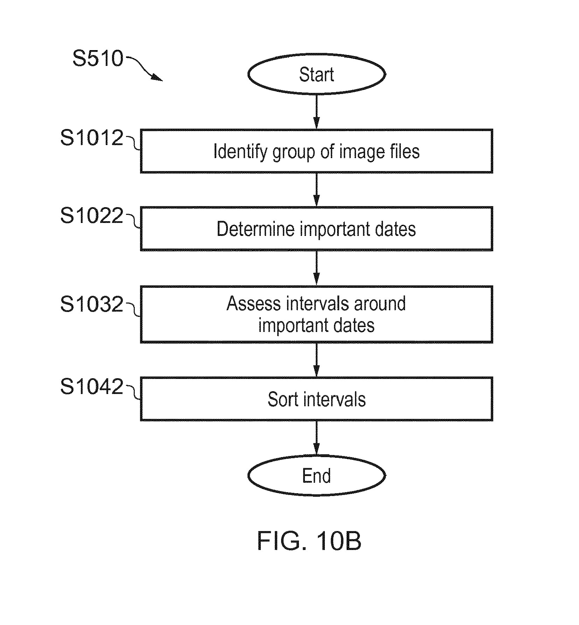

FIGs. 9A and 9B are timelines that show how algorithms, shown respectively in Figures 10A and 10B, are used by the image management software 500 to identify sub-groups of images by applying a selection criterion based upon the date of creation of the image files. FIG. 9A demonstrates a date clustering algorithm, for which time intervals 913, 914, 915, 916 are identified based upon the number of images files taken on each day of the time interval. FIG. 9B demonstrates an algorithm that uses predefined dates to identify time intervals 923, 924, 925. The date clustering algorithm shown in FIGs 9A and 10A is used to identify the sub-group of images displayed in FIG. 6A. The algorithm that uses predefined dates shown in FIGs 9B and 10B is used to identify the sub-group of images displayed in FIG. 7A.

FIG. 9A shows a bar chart 910 depicting the number of images created for each date along a timeline 911. A threshold 912 is used identify time intervals 913, 914, 915, 916. For each of these time intervals 913, 914, 915, 916, the threshold is exceeded on each day of the time interval. Dates are not included in a time interval if the threshold 912 is not exceeded. Accordingly, for each of the time intervals that are defined 913, 914, 915, 916, the threshold 912 was not exceeded on dates that occur immediately before and immediately after the time interval. It is possible that the time interval could be a single day if the number of images created on adjacent days does not exceed the threshold, for example time interval 913. However, if the number of images created on adjacent days exceeds the threshold, then these dates are within the time interval, for example time intervals 914, 915 and 916.

In connection with Fig. 10A, a group of image files is identified S1011 by selecting image files that have a date of creation within a specified time period. The default time period is 12 months from the current date (i.e. the last year), but could be changed, for example, to 24 months (i.e. the last two years). Next, the image management software 500 determines whether a number of images created on each date exceeds a threshold S1021. The dates are filtered so that if the number of images created on a particular date does not exceed a threshold, then this date is ignored. Next time intervals are defined S1031, wherein the number of images created on adjacent dates exceeds the threshold for each date within the time interval. The time intervals are then sorted S1041 based upon the number of images that were created within the time period. A relevancy value is assigned to the time interval, the relevancy value being determined by the number of images created during the time interval. Thus, the selection criterion is based upon whether the images were created within a time period. The image management software 500 regards each time interval as being a separate occasion, and therefore the selection criterion can be used to generate questions about the occasions that have been identified.

FIG. 9B shows a bar chart 920 depicting the number of images created for each date along a timeline 921. A threshold 922 is used identify time intervals (923, 924, 925). Each of these time intervals (923, 924, 925) includes a predefined date, and optionally dates before and after the predefined date. In the example shown in FIG. 9B, each time interval has a duration of 5 days. A first tolerance value specifies the number of adjacent dates used that occur before the predefined date. A second tolerance value specifies the number of adjacent dates used that occur after the predefined date. The example shown in FIG. 9B shows a default first tolerance value and a default second tolerance value of 2. For each of the time intervals identified, the image management software 500 assesses whether the average number of image files created each day exceeds the threshold. For time interval 923, the threshold is exceeded for all of the days in the time interval, and so the time interval satisfies the selection criterion. For time interval 924, the average number of images created each day does not exceed the threshold, and so the time interval around that particular predefined date does not satisfy the selection criterion. For time interval 925, the average number of images created each day does exceed the threshold, and so the time interval around that predefined date does satisfy the selection criterion, even though the threshold is not exceeded on all of the days in the time interval. Optionally, the first tolerance value and the second tolerance value could be determined by assessing whether the threshold value is satisfied for dates surrounding the predefined date.

The image management software 500 is programmed to include international dates, local dates, and personal dates as predefined dates. Examples of predefined dates are provided in the following table:

| **International dates** | **Local dates (e.g. Hungary)** | **Personal dates** |
|---|---|---|
| Christmas | National Day | Birthday |
| New Year | National Defence Day | Name day |
| Easter | Day of the independent Hungary | Anniversary |
| Halloween | | Party |
| Valentine's Day | | Concert/gig |
| Mother's Day | | |
| Father's Day | | |

The personal dates can be specified by the user or alternatively can be recorded by the image management software following responses that the user makes to prompts. The local dates rely upon the image management software storing the user's current or usual location, which could be entered during the user registration process. The predefined dates used in FIG. 9B are depicted by the dark bars at the centre of each time interval. The predefined dates used for FIG. 9B could be, for example, Christmas Day, New Year's Day and a Birthday.

In connection with Figure 10B, a group of image files is identified S1012 by the image management software 500, either upon uploading the images or upon launching the image management software 500. Next, a list of predefined dates is used for determining which important dates are to be used as part of the selection criterion S1022. The number of images created on each important date is determined. The year is ignored when assessing whether the number of images created on the predefined date exceeds the threshold. For each date on the list of predefined dates, the algorithm checks whether the total number of images created exceeds the threshold. Thus, time intervals are chosen around predefined dates for which the average number of images created per day in the time interval exceeds the threshold S1032. The predefined dates are then sorted S1042 by the number of image files created during the time interval around each date. A relevancy value is assigned to each predefined date, the relevancy value being determined by the average number of images created during the time interval around the predefined date. If the total number of image files around a predefined date does not exceed the threshold, then the predefined date is skipped, and the time interval around that date is not used for defining the selection criterion.

The methods described in FIGs. 10A and 10B result in an ordered list of time intervals. The time intervals were chosen based upon whether the threshold 912, 922, has been exceeded. In some embodiments, the user can specify the value of threshold, with a default value being used if necessary. Alternatively, the threshold may be dependent upon the number of images that are available for selection, thus adapting the software for each individual user's collection of images. Preferably, the image management software 500 gives priority to the time intervals for which the average number of images is the highest, so that the most important events can be labelled and organised first. Accordingly, using one of the methods as shown in FIGs. 10A and 10B, the date of creation of the image file is used as a selection criterion that is used to select a sub-group of image files from the group of image files that have been identified. The group of image files is identified by the image management software 500. In this embodiment a collection of image files is identified as all the images that are associated with a particular user's unique personal identifier in the image management software 500. In other embodiments, it may be possible for a user to select a part of the entire collection of their images for use as the collection of images. In yet further embodiments the user may be provided a function to include some of another user's images in the collection for the tagging method.

For a sub-group of image files that has been identified, there are many advantages that come from labelling the image files within the sub-group. Because the label is applied to a sub-group of images by a user in a single context, labour for the user of identifying relevant images and thinking of suitable labels is reduced. Labelling improves the display of images by including information about the content of the images, can improve the archiving of images by using the labels to group similar image files together, and can collect information about the user so that the image management software can be used to target advertisements that are relevant to the user. Further, labelling makes it easier to search the image files in order to retrieve relevant images.

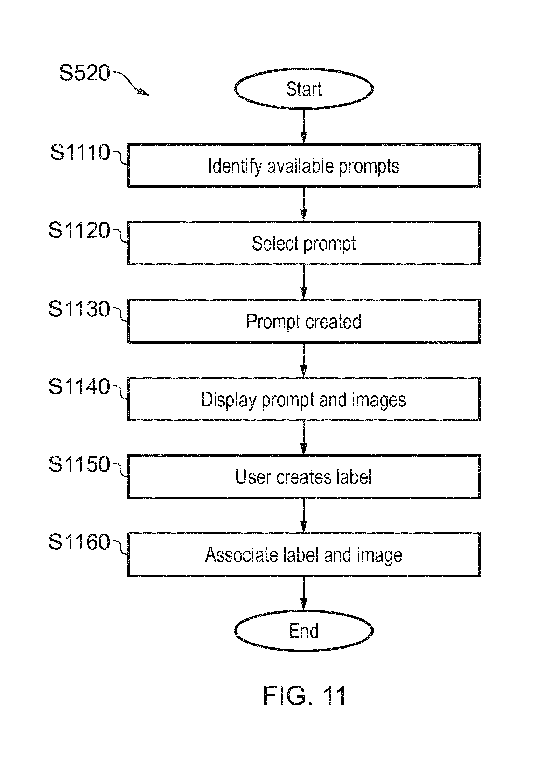

The image management software 500 is programmed to provide prompts 630, 730 that are tailored to the sub-group of image files that has been automatically selected from the collection. FIG. 11 illustrates how the image files are labelled, thus providing further details of step S520 in FIG. 5. In step S1110, appropriate prompts are identified based on the method used for selecting the sub-group of images. For example for the screen shown in Figure 6A, where the sub-group of images was selected using the method described in connection with Figure 10A, the images belong to a time interval during which a large number of photos were taken, but little other context information is available. Accordingly, suitable prompts that are prestored in the image management software include:
'What was the occasion?'
'What are these photos of?'
'What were you doing at this time?'

The image management software is configured to select between the available prompts S1120 at random. In the other example shown in Figure 7A, where the sub-group of images was selected using the method described in connection with Figure 10B, the sub-group of images was selected based on predefined dates. In this case the available prompts are:
'Are these photos from Christmas?'
'Are these photos from New Year?'
'Are these photos from Easter?
'Are these photos from Halloween?'
etc.

In this case, the prompt is selected in accordance with the predefined date used to select the sub-group of photos. For example, if the predefined date around which date the sub-group photos were taken is Easter, the question that selected by the image management software in S1120 would be 'Are these photos from Easter'.

After selection of the relevant prompt in S1120, the prompt is created S1130 and displayed with the sub-group of images on a web page served to the client. In response to the displayed sub-group of images and prompt, the user either enters a label to be associated with the images S1150 as shown in Figure 6A or selects appropriate images for the predefined event as shown in Figure 7A.

In step S1160, the image management software associates a label with the images. Creating an association between the label and the image S1160 involves storing the label together with the address of the image file storage location. Alternatively, the image file could be added directly to the image file. Each image file in the group can be associated with an individual copy of the image label, or alternatively each image file can be associated with the same copy of the image label. Described above are two different workflows for prompting a user to label sub-groups of images. However, the image management software can be configured to select sub-groups of images in different ways and to provide relevant prompts so that a user can label his or her images in different ways. Some of these methods of identifying a sub-group and related prompt are now described.

The above disclosure provides that sub-groups of image files can be selected from a collection of images based upon the date of creation of the image file. Alternative methods for identifying sub-groups of images are available other than the date of creation of the images, including identifying sub-groups of images based upon custom labels, album names, image titles, the season, popularity, location, and camera model used to take the photos. Sub-groups can be formed of images based on two or more image properties, allowing the prompts to be further tailored.

In connection with custom labels, if a user has already labelled a number of his or her images with a particular label relating to pets, such as 'cat', that label could be used to select a sub-group of images. For the group of images that have already been labelled 'cat', the prompt:
'What is the name of the cat?'
'Whose cat is this?'
could be displayed. Of course, this idea is not limited to cats and other keywords relating to pets could be monitored by the image management software (e.g. dog, canary, etc.) so that if a user has entered more than a threshold number of custom labels to images, which labels relate to a particular pet label, this workflow becomes available. The monitoring of custom labels is not limited to pets. Other areas in which keywords could be monitored include food stuffs, sports, etc.

In connection with album names, if a user stores a number of images in an album with a particular name, e.g. 'summer holiday', the image management software could monitor folder names for a predefined list of key words (e.g. holiday, birthday, wedding, family etc.). When a folder is identified including one of the predefined key words, the image management software enables a workflow that selects the images in the folder as the sub-group of images and displays a prompt such as:
'Where did you go on holiday?'
'Whose birthday is this?'
'Whose wedding is this?
'Add a family-member name to the family photos'
to prompt a user to add further labels to his or her images.

Similar to custom labels described as a criteria above, the formation of a sub-group based upon image titles can be achieved by analysing title names that are already associated with the image files. If the title that an image is associated with is recognised by the image management software 500, then a sub-group of these image files can be formed and an appropriate prompt selected. As shown in FIG. 7C, a title could also be used as the file name of an image file.

The formation of sub-groups of images based upon seasons can be achieved by analysing whether the date of creation of an image file falls during a particular period. Thus, the images could be grouped based upon seasons of a year (i.e. "spring", "summer", "autumn" and "winter". Images created during the seasons in different years can also be sub-grouped for comparison. The user is prompted to label the seasonal sub-group of images by choosing the best winter images or the funniest summer images using prompts such as:
'Which are your best winter images'
'Do these photos illustrate summer fun?'

In connection with popularity as a selection criteria, the image management software analyses the number of times that the image has been viewed either on a social media platform (by importing viewing data from the social media platform) or on the image management software by counting the number of times a page including the image is served to the client 102. Images that have a high view count but no labels, names or comments can be selected, and the user can receive the prompt:
'It looks like you really like these photos! Give them a title!'

If the images have not been viewed recently, for example within the past 2 months, the user can be prompted by:
'We bet that you have almost forgotten you took these! Name the events!'

Images that have a high popularity and do not have EXIF data indicating a shooting mode in which the image was taken (e.g. portrait or landscape modes on a compact camera) can be labelled upon being prompted by:
'What type of photograph are these?'

The formation of sub-groups based upon location can be achieved by analysing the location where the image file was created. If the location cannot be determined from the image file, the user can be prompted to specify the location. The user is asked whether or not the events happened at the user's home. For example, the software can create a sub-group of images taken on a weekend date that have a location away from a user's known home location, and can provide the prompt:
'Are these photos from a weekend away from home? Name the location!'

If the software identifies that images from at least 4 consecutive days during the summer were taken at a location other than the home location, it can provide the prompt:
'Are these photos from your summer holiday? Where have you been to?'

The above methods for forming sub-groups of images can be combined. For example, a prompt enquiring whether the images relate to a "summer holiday" can be provided if the image management software identifies images that are in a first sub-group of images that were created in the summer and also in a second sub-group of images that were created away from home.

In connection with the camera model, the image management software can identify a model of camera and lens used to take an image from the image file EXIF data. A sub-group of images could be selected based on the camera model and/or lens. For example, for images taken with a 24mm lens, a prompt could be displayed:
'which are your favourite wide-angle images?'
'which are your favourite landscape images?'

The image management software 500 is configured to store user preferences and user history in the memory 230. This allows the image management software 500 to recognise how the user forms sub-groups of images. The software is also configured to predict the types of prompts that the responds to, allowing the prompt to be chosen based upon responses to previous prompts.

The examples described herein have particular application to image labelling, but it will be appreciated that the disclosure provides for labels to be associated with information files or other data. Although examples have been given in the context of websites, it is envisaged that the disclosure also relates to applications that are not hosted on the internet, such as digital photo albums. Although the image management software 500 has been described being stored and executed by the server 106, it is envisaged that the disclosure also relates to the image management software being stored and executed by the client 102 or a combination of the server 106 and the client 104. The image management software 500 can be stored and executed by a client computer 102 or a mobile device such as a laptop computer, a digital camera, a digital photograph frame or a mobile cellular telephone. The image management software 500 can be stored on a computer-readable storage medium for example a hard drive 232 or a removable disk.

## Claims

1. A method of labelling images contained in image files performed by an information processing apparatus, comprising:
applying a selection criterion to a group of image files in order to select a sub-group of image files that have a shared property (S510);
identifying the sub-group of image files to a user;
displaying to the user a prompt (630, 670; 730, 732, 742); and
upon receiving a user response to the prompt:
creating an image label based upon the user response (S520); and
creating an association between the label and an image file in the group of image files.

2. A method according to claim 1, wherein the selection criterion is based upon at least one of:
a date that is attributed to the image file;
a time attributed to the image file;
a means of creation of the image file;
a geographical location where the image file was created; and
metadata that is attributed to the image file.

3. A method according to claim 1 or claim 2, wherein the selection criterion involves identifying a time interval and selecting image files that were created during that time interval.

4. A method according to claim 3, wherein the time interval (913, 914, 915, 916) includes a date for which the number of image files created exceeds a threshold (912).

5. A method according to claim 3, wherein the time interval (923, 924, 925) includes a plurality of adjacent dates, wherein for each of the dates the number of image files created exceeds a threshold (922).

6. A method according to claim 3, wherein the time interval (923, 924, 925) includes a plurality of adjacent dates, wherein an average of the number of image files created on each date of the time interval exceeds a threshold.

7. A method according to claim 6, wherein the time interval (923, 924, 925) includes a predefined date.

8. A method according to claim 6, wherein the time interval (923, 924, 925) comprises:
a first number of dates that occur before the predefined date, the first number of dates determined by a first tolerance value; and
a second number of dates that occur after the predefined date, the second number of dates determined by a second tolerance value.

9. A method according to claim 7 or claim 8, wherein the predefined date is a date that represents a public holiday, a religious event, a date of cultural significance, or a date that has been specified by the user.

10. A method according to any one of claims 4 to 9, wherein the threshold is calculated based upon the number of image files that are available for selection from the group of image files.

11. A method according to any one of claims 4 to 10, comprising:
calculating a relevancy value based upon the number of image files created during the time interval;
assigning the relevancy value to the time interval; and
ranking the time interval based upon its relevancy value (S1041; S1042).

12. A method according to any previous claim, wherein the prompt (630; 730) is generated based on the selection criterion.

13. A method according to any previous claim, wherein the prompt is randomly selected from a plurality of possible prompts.

14. A method according to any previous claim, wherein the user response (650) to the prompt comprises text entered by a user.

15. A method according to any previous claim, wherein the user response to the prompt comprises a user:
adding image files to the sub-group of image files; or
removing image files from the sub-group of image files.

16. A method according to any previous claim, wherein the association between the image label and each image file comprises the storage of a custom label.

17. An apparatus for labelling images contained in image files, comprising:
selecting means configured to apply a selection criterion to a group of image files in order to select a sub-group of image files that have a shared property;
generating means configured to generate user interface information for identifying the sub-group of image files to a user and displaying a prompt to the user;
receiving means configured to receive a user response to the prompt; and
creating means configured to create an image label based upon the user response, and create an association between the label and an image file in the group of image files.

18. A program that, when implemented by an information processing apparatus, causes the information processing apparatus to perform a method according to any of claims 1 to 16.

19. A computer-readable medium storing a program according to claim 18.
